# EUROPEAN PATENT APPLICATION

(11) **EP 4 582 291 A1**
(43) Date of publication of application: **09.07.2025**
(21) Application number: 23859665.4
(22) Date of filing: 23.01.2023
(51) Int. Cl.: B60L 15/20, B60L 3/00, B60L 50/60, B60L 58/12

(54) **ELECTRIC WORK VEHICLE**

(30) Priority: 30.08.2022 JP 2022136871
(71) Applicant: Kubota Corporation, Osaka 556-8601 (JP)
(72) Inventor: OKAZAKI Kazuto, Sakai-shi, Osaka 590-0908 (JP); TAKASE Shunya, Sakai-shi, Osaka 590-0908 (JP)
(74) Representative: Müller-Boré & Partner Patentanwälte PartG mbB
(86) International application number: PCT/JP2023/001817
(87) International publication number: WO 2024/047890

(57) **Abstract**

An electric work vehicle is provided with: a power storage device configured to store power; a motor configured to drive at least either a travel device or a work device by consuming the power stored in the power storage device; a remaining amount detector configured to detect a remaining amount of power suppliable by the power storage device; and a controller switchable between a first control for controlling driving of the motor in response to a remaining amount value indicative of the remaining amount being greater than a preset threshold, and a second control for controlling driving of the motor so that power consumption of the motor is smaller than in the first control in response to the remaining amount value being less than or equal to the threshold.

## Description

### Technical Field

The present invention relates to an electric work vehicle.

### Background Art

For example, JP 2013-110893A discloses an electric work vehicle ("electric work machine" in the document) that is provided with a power storage device ("battery" in the document) storing power, a motor ("electric motor" in the document) that can perform driving based on the power stored in the power storage device, and a remaining amount detector ("remaining amount detection means" in the document) that detects the remaining amount of power that the power storage device can supply.

### Prior Art Document

### Patent Document

Patent Document 1: JP 2013-110893A

### Disclosure of the Invention

### Problem to be Solved by the Invention

In the electric work vehicle disclosed in JP 2013-110893A, the end time of the work is reported based on a detection value detected by the remaining amount detector and a pre-stored detection value. Meanwhile, there may be cases where the driver forcibly continues the work even after being informed of the end time of the work. However, according to the configuration of the electric work vehicle disclosed in JP 2013-110893A, if the driver forcibly continues the work, there will be the risk that the supply power of the power storage device will be depleted while the electric work vehicle is moving after the end of the work. In the case of a work vehicle whose power source is an internal combustion engine, even if the fuel for the internal combustion engine is depleted, the work vehicle can travel again by refueling on the spot. In the case of an electric work vehicle, if the supply power of the power storage device is depleted during movement, it will be necessary to arrange a tow vehicle to tow the electric work vehicle to a charging location, a power supply vehicle for charging, and the like. Accordingly, if the power supply of the electric work vehicle is depleted during movement, the driver or the like is forced to do more cumbersome work than in the case of a work vehicle whose power source is an internal combustion engine. Therefore, there is room for improvement to ensure that the supply power of the power storage device is not depleted until the electric work vehicle arrives at the charging location.

The present invention aims to provide an electric work vehicle that moves without depleting supply power of a power storage device.

### Means for Solving Problem

An electric work vehicle of the present invention includes: a power storage device configured to store power; a motor configured to drive at least either a travel device or a work device by consuming the power stored in the power storage device; a remaining amount detector configured to detect a remaining amount of power suppliable by the power storage device; and a controller switchable between a first control for controlling driving of the motor in response to a remaining amount value indicative of the remaining amount being greater than a preset threshold, and a second control for controlling driving of the motor so that power consumption of the motor is smaller than in the first control in response to the remaining amount value being less than or equal to the threshold.

According to the present invention, the controller is switchable between the first control and the second control, and the power consumption of the motor is smaller in the second control than in the first control. Accordingly, when the remaining amount of power in the power storage device is reduced, the consumption of the power remaining in the power storage device is suppressed by reducing the power consumption of the motor. With this, the driver can drive the electric work vehicle and move the electric work vehicle to the charging location before the power of the power storage device is depleted. This realizes an electric work vehicle that moves without depleting supply power of a power storage device.

In the present invention, preferably, the electric work vehicle further includes a threshold setting unit manually operable to set the threshold.

Since the distance between the work target location and the charging location varies depending on the work environment, it is desirable to have a configuration that allows the threshold to be set according to the work environment. In this configuration, for example, the threshold can be set according to the distance between the work target location and the charging location. Accordingly, when the electric work vehicle travels for work, the electric work vehicle can consume all the power that can be supplied by the storage device, and can travel to the charging location without depleting the power during the travel.

In the present invention, preferably, the threshold is set within a range of 5 percent or more and 20 percent or less of a total capacity of power suppliable by the power storage device.

According to the present configuration, it is possible to set the threshold to an appropriate value before the power suppliable by the power storage device is depleted.

In the present invention, preferably, the electric work vehicle further includes a work motive power transmitter configured to perform motive power transmission from the motor to the work device, and the controller controls, in the second control, the work motive power transmitter to interrupt the motive power transmission.

According to the present configuration, in the second control, the work device is no longer driven, and the electric work vehicle can only travel based on the second control. Accordingly, the consumption of the power remaining in the power storage device is suppressed.

In the present invention, preferably, the electric work vehicle further includes: a link mechanism to which the work device is connectable, the link mechanism being movable up and down between a work position at which the work device performs work, and a non-work position higher than the work position; and a lifting and lowering device configured to lift and lower the link mechanism, and in the second control, in response to the link mechanism being located at the work position, the controller controls the lifting and lowering device to lift the link mechanism to the non-work position.

According to the present configuration, in the second control, the work device can no longer perform ground work. This suppresses the consumption of the power remaining in the power storage device.

In the present invention, preferably, in response to the remaining amount value reaching a value less than or equal to the threshold during execution of the first control, the controller stops driving the motor.

According to the present configuration, it is possible to avoid the risk that the driver forcibly continues the work in a state where the remaining amount value of the power suppliable by the power storage device is less than or equal to the threshold.

In the present invention, preferably, the electric work vehicle further includes a manually operable operation tool, and the controller switches to the second control in response to the operation tool being operated with the remaining amount value being less than or equal to the threshold.

According to the present configuration, the controller executes the second control based on human operation performed on the operation tool, from a state in which the driving of the motor is stopped. This avoids the risk that switching from the first control to the second control will be made without the driver noticing.

In the present invention, preferably, the electric work vehicle further includes a display unit configured to display the remaining amount, and the display unit displays the remaining amount within a range from a total capacity of power suppliable by the power storage device to the threshold.

According to the present configuration, the driver can perform an operation together with normal work travel, based on the remaining amount displayed on the display unit.

### Brief Description of the Drawings

FIG. 1 is a left side view of an electric tractor.
FIG. 2 is a left side view showing a layout of an inverter and the like.
FIG. 3 is a diagram showing a flow of motive power transmission.
FIG. 4 is a block diagram showing a configuration of control of an electric work vehicle.
FIG. 5 is a diagram showing a value of the remaining amount of power displayed on a meter panel.
FIG. 6 is a flowchart showing processing of switching from the first control to the second control.

### Best Mode for Carrying Out the Invention

An embodiment for implementing the present invention will be described with reference to the drawings. Note that, in the following description, unless otherwise stated, the direction of an arrow "F" in the drawings refers to the "front" direction, the direction of an arrow "B" refers to the "rear" direction, the direction of an arrow "L" refers to the "left" direction, and the direction of an arrow "R" refers to the "right" direction. Also, the direction of an arrow "U" in the drawings refers to the "up" direction, and the direction of an arrow "D" refers to the "down" direction.

### [Overall Configuration of Electric Work Vehicle]

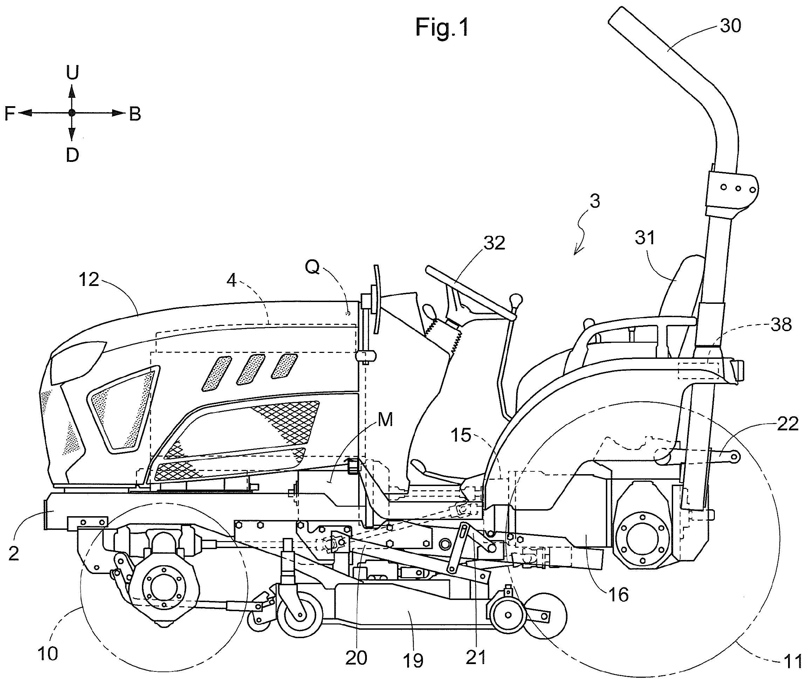

The following describes an electric work vehicle according to the present embodiment. FIG. 1 shows an electric tractor as an example of an electric work vehicle. As shown in FIG. 1, the electric tractor includes left and right front wheels 10, left and right rear wheels 11, and a cover member 12.

The electric tractor also includes a body frame 2 and a driving section 3. The body frame 2 is supported by the left and right front wheels 10 and the left and right rear wheels 11.

The cover member 12 is disposed in a front portion of the body of the electric tractor. The driving section 3 is provided behind the cover member 12. In other words, the cover member 12 is provided in front of the driving section 3.

The driving section 3 includes a protective frame 30, a seat 31, and a steering wheel 32. A driver can sit on the seat 31. Accordingly, the driver can get on the driving section 3. The steering wheel 32 is operated to change the orientation of the left and right front wheels 10. The driver can perform various driving operations in the driving section 3.

The electric tractor includes a battery unit 4. Also, the cover member 12 is pivotable about an opening/closing axis Q extending in the left-right direction of the body. Accordingly, the cover member 12 is openable and closeable. When the cover member 12 is closed, the battery unit 4 is covered by the cover member 12. The battery unit 4 corresponds to the "power storage device" of the present invention.

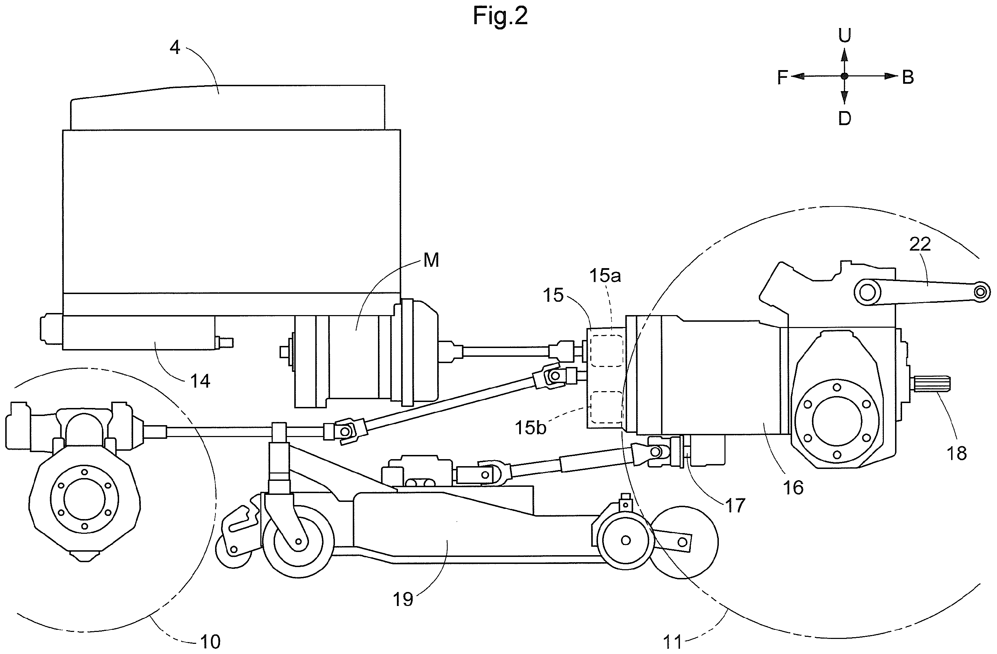

As shown in FIG. 2, the electric tractor includes an inverter 14 and a motor M. The battery unit 4 supplies power to the inverter 14. The inverter 14 converts DC power supplied from the battery unit 4 into AC power, and supplies the AC power to the motor M. The motor M is driven by the AC power supplied from the inverter 14. In other words, the motor M is driven by consuming the power stored in the battery unit 4.

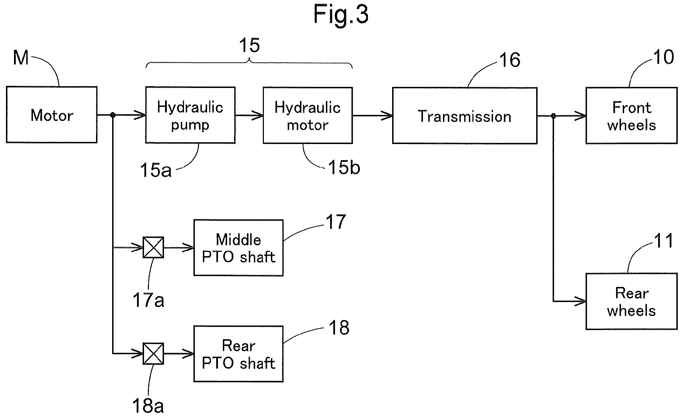

As shown in FIGS. 2 and 3, the electric tractor includes a hydraulic static transmission 15 and a transmission 16. As shown in FIG. 3, the hydraulic static transmission 15 includes a hydraulic pump 15a and a hydraulic motor 15b.

The hydraulic pump 15a is driven by rotational motive power transmitted from the motor M. As a result of the hydraulic pump 15a being driven, rotational motive power is output from the hydraulic motor 15b. Note that the hydraulic static transmission 15 is configured to change the speed of the rotational motive power between the hydraulic pump 15a and the hydraulic motor 15b. Also, the hydraulic static transmission 15 is able to change the transmission ratio in a stepless manner.

The rotational motive power output from the hydraulic motor 15b is transmitted to the transmission 16. The rotational motive power transmitted to the transmission 16 is subjected to speed change by a gear transmission mechanism included in the transmission 16, and is distributed to the left and right front wheels 10 and the left and right rear wheels 11. Thus, the left and right front wheels 10 and the left and right rear wheels 11 are driven.

As shown in FIGS. 2 and 3, the electric tractor also includes a middle PTO shaft 17 and a rear PTO shaft 18. A first clutch 17a is interposed between the motor M and the middle PTO shaft 17. Also, a second clutch 18a is interposed between the motor M and the rear PTO shaft 18.

The first clutch 17a and the second clutch 18a function as PTO clutches. The first clutch 17a and the second clutch 18a are each configured to be able to change its state between an ON state of transmitting power and an OFF state of not transmitting power. When the first clutch 17a is in the ON state, rotational motive power is transmitted from the motor M to the middle PTO shaft 17. Also, when the second clutch 18a is in the ON state, rotational motive power is transmitted from the motor M to the rear PTO shaft 18. The first clutch 17a and the second clutch 18a correspond to the "work motive power transmitter" of the present invention that is capable of performing motive power transmission from the motor M to the work device.

In this way, the rotational motive power output from the motor M is distributed to the hydraulic pump 15a, the middle PTO shaft 17, and the rear PTO shaft 18. With this, the middle PTO shaft 17 and the rear PTO shaft 18 are rotated. In other words, the motor M drives at least either the travel device or the work device by consuming the power stored in the battery unit 4.

If a work device is connected to the middle PTO shaft 17 or the rear PTO shaft 18, the work device is driven by the rotational motive power transmitted by the middle PTO shaft 17 or the rear PTO shaft 18. For example, as shown in FIG. 2, in the present embodiment, a mowing device 19 is connected to the middle PTO shaft 17. The mowing device 19 is driven by the rotational motive power transmitted by the middle PTO shaft 17.

The mowing device 19 is suspended and supported by a link mechanism 20. A middle lift arm 21 is coupled to the link mechanism 20. The middle lift arm 21 is hydraulically driven to swing up and down to lift and lower the link mechanism 20. In other words, the work device exemplified by the mowing device 19 can be coupled to the link mechanism 20. Also, the link mechanism 20 and the work device exemplified by the mowing device 19 are movable up and down between a work position at which the work device works and a non-work position higher than the work position. The middle lift arm 21 corresponds to the "lifting and lowering device" of the present invention.

Although not shown in the drawings, a known three-point link mechanism is provided at a rear end of the body frame 2. A rear lift arm 22 is connected to this three-point link mechanism. The rear lift arm 22 is hydraulically driven to swing up and down to lift and lower the three-point link mechanism. As a result, the three-point link mechanism and the work device coupled to the three-point link mechanism are movable up and down between the work position at which the work device works and the non-work position higher than the work position. The rear lift arm 22 corresponds to the "lifting and lowering device" of the present invention.

### [Configuration of Control System]

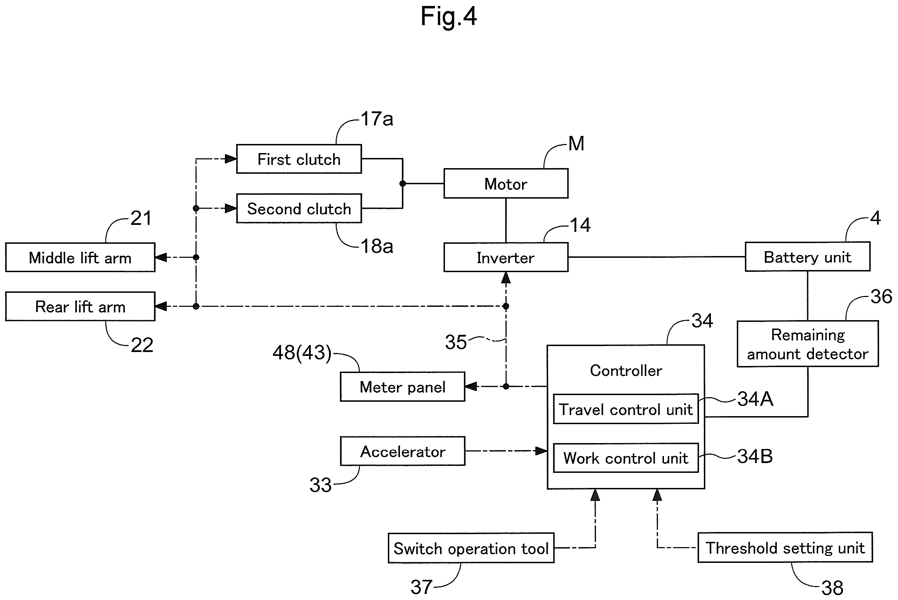

As shown in FIG. 4, the control configuration of the motor M includes an accelerator 33, a controller 34 that controls the driving of the motor M, and the inverter 14. The controller 34 is the core element of the control system of the electric work vehicle and is configured as a collection of a plurality of ECUs. The accelerator 33 is provided near the steering wheel 32. Although not shown in the figure, the accelerator 33 includes a lever that can be pivoted and operated, and a potentiometer that detects the amount of pivoting operation of the lever. The accelerator 33 is connected to the controller 34. The controller 34 is connected to the inverter 14, a valve control unit of the middle lift arm 21, a valve control unit of the rear lift arm 22, a control unit of the first clutch 17a, and a control unit of the second clutch 18a, via a signal harness 35 of the CAN (Controller Area Network) type. The controller 34 includes a travel control unit 34A and a work control unit 34B.

The travel control unit 34A outputs a command signal to the inverter 14 in response to a command from the accelerator 33. The inverter 14 controls the output of the motor M by adjusting the power (such as a voltage value, a frequency, and a current value) to be supplied to the motor M from the battery unit 4, in response to the command signal from the controller 34.

The work control unit 34B outputs command signals to the respective control units of the middle lift arm 21, the rear lift arm 22, the first clutch 17a, and the second clutch 18a in response to a command from a not-shown work operation tool. The not-shown work operation tool refers to, for example, a lifting and lowering lever for operating the middle lift arm 21, a lifting and lowering lever for operating the rear lift arm 22, a lever and a button for operating the first clutch 17a, a lever and a button for operating the second clutch 18a, and the like.

The battery unit 4 is, for example, a lithium-ion battery. Although not shown in the figure, the battery unit 4 is constituted by a number of small low-voltage unit batteries (cells) stacked together. The output voltage of the battery unit 4 is, for example, 250 volts. The unit batteries (cells) are stored in a storage case. These unit batteries (cells) are sealed by the storage case.

A remaining amount detector 36 detects the remaining amount of power that can be supplied by the battery unit 4 based on the voltage output from the battery unit 4. The value detected by the remaining amount detector 36 is transmitted to the controller 34.

An operation panel 43 includes a meter panel 48. The meter panel 48 is connected to the controller 34, and the controller 34 controls the operation of the meter panel 48. The meter panel 48 corresponds to the "display unit" of the present invention.

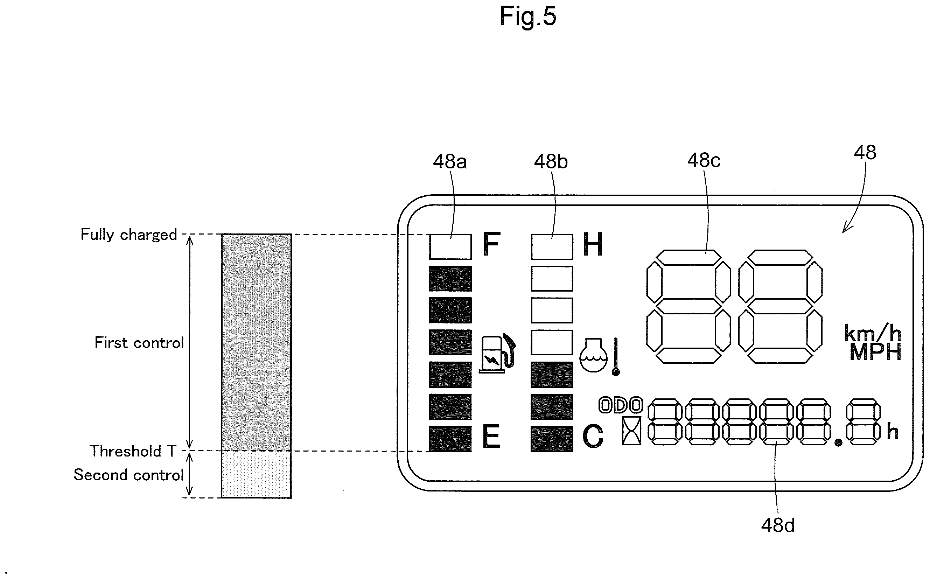

As shown in FIG. 5, the meter panel 48 includes a remaining battery amount display area 48a, a battery temperature display area 48b, a speed display area 48c, a multi-purpose display area 48d, and the like. The remaining battery amount display area 48a is formed as a segmented bar graph and displays the remaining amount of power that can be supplied by the battery unit 4 in stages. In other words, the meter panel 48 can display the remaining amount of power that can be supplied by the battery unit 4. The battery temperature display area 48b is also formed as a segmented bar graph and displays the temperature of the heat generated by the battery unit 4 in stages. The speed display area 48c and the multi-purpose display area 48d are seven-segment displays commonly used to display digital numerical values. The speed display area 48c displays, for example, the travel state of the vehicle (ground speed), the work state (e.g., the rotational speeds of the middle PTO shaft 17 and the rear PTO shaft 18), and so on. The multi-purpose display area 48d is normally used as an hour meter or a meter for displaying battery consumption per travel, but also displays an error code when an error has occurred.

The portion of the remaining battery amount display area 48a indicated by "F" indicates a state in which the battery unit 4 is fully charged. The portion of the remaining battery amount display area 48a indicated by "E" indicates a state in which the power that can be supplied by the battery unit 4 is about to be depleted. In the present embodiment, a value of the remaining amount (remaining amount value) of, for example, 10 percent of the total capacity of power that can be supplied by the battery unit 4 is set as a threshold T. When the display of the segmented bar graph in the remaining battery amount display area 48a drops to the "E" portion, the remaining amount of power that can be supplied by the battery unit 4 remains as set by the threshold T. In other words, the meter panel 48 displays the remaining amount within the range from the total capacity of power that can be supplied by the battery unit 4 to the threshold T. As a result, even if the display of the segmented bar graph in the remaining battery amount display area 48a drops to the "E" portion, the work vehicle can still travel with the remaining power of the battery unit 4.

The threshold T can be set according to, for example, the distance between the agricultural field to be worked on and a charging station. The controller 34 can input signals from a threshold setting unit 38. The threshold setting unit 38 is, for example, a volume knob, a switch, or a software button displayed on the meter panel 48. The threshold setting unit 38 accepts human operation. The controller 34 can set the threshold T based on the human operation performed on the threshold setting unit 38. By the driver operating the threshold setting unit 38, the threshold T can be set within a range of, for example, 5 percent or more and 20 percent or less of the total capacity of power that can be supplied by the battery unit 4, i.e., the capacity of the battery unit 4.

### [Regarding First Control and Second Control]

The controller 34 executes the first control when the remaining amount value of power is greater than the threshold T, and executes the second control when the remaining amount value of power is less than or equal to the threshold T.

The first control is a control in which the travel control unit 34A can output a command signal to the inverter 14 and the work control unit 34B can output command signals to the respective control units of the middle lift arm 21, the rear lift arm 22, the first clutch 17a, and the second clutch 18a. When the remaining amount value indicating the remaining amount of power is greater than the preset threshold T, the work vehicle can travel for work based on the first control.

The second control is a control in which the travel control unit 34A can output a command signal to the inverter 14 and the work control unit 34B can output command signals for stopping the work to the respective control units of the middle lift arm 21, the rear lift arm 22, the first clutch 17a, and the second clutch 18a. Also, in the second control, the travel control unit 34A outputs a command signal to the inverter 14 so that the power consumption of the motor M is smaller than in the first control. That is, the second control is to control the driving of the motor M so that the power consumption of the motor M is smaller than in the first control, when the remaining amount value is less than or equal to the threshold T.

In this way, the controller 34 can switch between the first control for controlling the driving of the motor M if the remaining amount value indicating the remaining amount is greater than the preset threshold T, and the second control for controlling the driving of motor M so that the power consumption of the motor M is smaller than in the first control, if the remaining amount value is less than or equal to the threshold T.

The controller 34 can input a signal from a switch operation tool 37. The switch operation tool 37 is, for example, a lever, a switch, a software button displayed on the meter panel 48, or the like. The switch operation tool 37 accepts human operation. The controller 34 can switch between the first control and the second control based on the human operation performed on the switch operation tool 37. The switch operation tool 37 corresponds to the "operation tool" of the present invention.

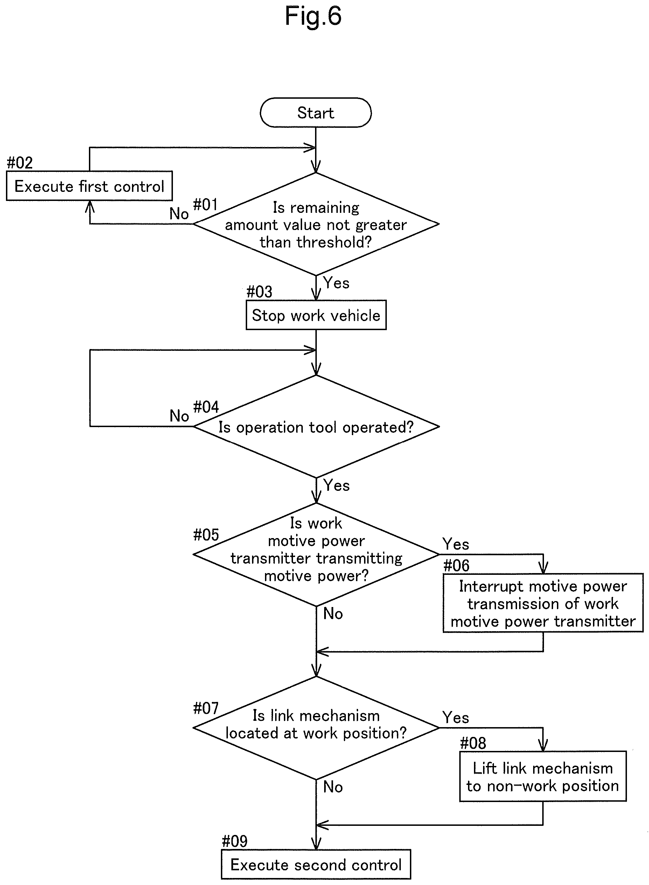

The switching from the first control to the second control will be described with reference to FIG. 6. The controller 34 determines whether or not the remaining amount value of power that can be supplied by the battery unit 4 is not greater than the threshold T (step #01). If the remaining amount value of the power is greater than the threshold T (step #01: No), the controller 34 executes the first control (step #02). On the other hand, if the remaining amount value of power is less than or equal to the threshold T (step #01: Yes), the controller 34 executes the process to stop the work vehicle (step #03). In step #03, the travel control unit 34A outputs a stop signal to the inverter 14. As a result, the motor M stops, and the travel device and the work device stop as the motor M stops. That is, the controller 34 stops driving the motor M when the remaining amount value of the power that can be supplied by the battery unit 4 is reduced to a value less than or equal to the threshold T while the first control is being executed.

After the motor M is stopped, the controller 34 determines whether or not the switch operation tool 37 is operated (step #04). If the switch operation tool 37 is not operated (step #04: No), the process of step #04 continues with the motor M stopped. In other words, the controller 34 switches to the second control when the remaining amount value of the power that can be supplied by the battery unit 4 is less than or equal to the threshold T and the switch operation tool 37 is operated.

If the switch operation tool 37 is operated (step #04: Yes), the controller 34 performs determination in step #05 and step #07 in order to execute the second control. The controller 34 determines whether or not the first clutch 17a and the second clutch 18a are both transmitting the motive power (step #05). If both the first clutch 17a and the second clutch 18a are interrupting the motive power (step #05: No), the procedure moves to the process in step #07. If the first clutch 17a is transmitting the motive power (step #05: Yes), the work control unit 34B outputs a command signal for interrupting the motive power to the control unit of the first clutch 17a, and the first clutch 17a interrupts the motive power (step #06). Also, if the second clutch 18a is transmitting the motive power (step #05: Yes), the work control unit 34B outputs a command signal for interrupting the motive power to the control unit of the second clutch 18a, and the second clutch 18a interrupts the motive power (step #06). With this, the work device exemplified by the mowing device 19 is stopped. In this way, the controller 34 controls, in the second control, the work motive power transmitter to interrupt the motive power transmission.

In step #07, the controller 34 determines whether or not the link mechanism 20 and the three-point link mechanism provided at the rear end of the body frame 2 are both located at the work position. If both the link mechanism 20 and the three-point link mechanism are located at the non-work position (step #07: No), the controller 34 can control the motor M based on the second control (step #09). If the link mechanism 20 is located at the work position (step #07: Yes), the work control unit 34B outputs a command signal for lifting to the control unit of the middle lift arm 21, and the middle lift arm 21 swings upward (step #08). With this, the link mechanism 20 is lifted to the non-work position. In this way, in the second control, if the link mechanism 20 is located at the work position, the controller 34 controls the middle lift arm 21 to lift the link mechanism 20 to the non-work position. Also, if the three-point link mechanism is located at the work position (step #07: Yes), the work control unit 34B outputs a command signal for lifting to the control unit of the rear lift arm 22, and the rear lift arm 22 swings upward (step #08). With this, the three-point link mechanism is lifted to the non-work position. In this way, in the second control, if the three-point link mechanism is located at the work position, the controller 34 controls the rear lift arm 22 to lift the three-point link mechanism to the non-work position.

When the controller 34 executes the second control in step #09, the work device is prohibited from being driven and only the travel device can be driven. Also, the controller 34 controls, in the second control, the driving of the motor M so that the power consumption of the motor M is smaller than in the first control. This enables the work vehicle to travel while consuming only the minimum necessary power, even when the power that can be supplied by the battery unit 4 is reduced.

### [Other Embodiments]

The present invention is not limited to the configurations exemplified in the above embodiment, and other representative embodiments of the present invention will be given below.
(1) In the above-described embodiment, the motor M rotates and drives both the travel device (left and right front wheels 10 and left and right rear wheels 11) and the work device (mowing device 19), but the present invention is not limited to this embodiment. The motor M may be configured to drive one of the travel device and the work device.
(2) In the above-described embodiment, the battery unit 4 is exemplified as the power storage device, and a lithium-ion battery is exemplified as the battery unit 4, but the present invention is not limited to this embodiment. For example, the power storage device may be a solid-state battery.
(3) In the embodiment described above with reference to FIG. 6, in the second control, the controller 34 interrupts the motive power transmission to the first clutch 17a and the second clutch 18a, but the present invention is not limited to this embodiment. For example, the controller 34 may also be configured not to interrupt the motive power transmission to the first clutch 17a and the second clutch 18a in the second control. In this case, a configuration is also possible in which while the controller 34 is executing the second control, the driver performs human operation to interrupt the first clutch 17a and the second clutch 18a.
(4) In the embodiment described above with reference to FIG. 6, in the second control, when the link mechanism 20 is located at the work position, the controller 34 controls the middle lift arm 21 to lift the link mechanism 20 to the non-work position. Also, in the second control, when the three-point link mechanism is located at work position, the controller 34 controls the rear lift arm 22 to lift the three-point link mechanism to the non-work position. The present invention is not limited to these embodiments. For example, in the second control, the controller 34 may be configured to control the middle lift arm 21 not to lift the link mechanism 20 to the non-work position, and control the rear lift arm 22 not to lift the three-point link mechanism to the non-work position. In this case, a configuration is also possible in which while the controller 34 is executing the second control, the driver performs human operation to interrupt the middle lift arm 21 and the rear lift arm 22.
(5) In the embodiment described above with reference to FIG. 6, if the remaining amount value is reduced to a value less than or equal to the threshold T while the controller 34 is executing first control, the controller 34 stops driving the motor M, but the present invention is not limited to this embodiment. For example, a configuration is also possible in which if the remaining amount value is reduced to a value less than or equal to the threshold T while the controller 34 is executing the first control, the controller 34 switches to the second control without stopping driving the motor M and directly executes the second control. In this case, a configuration is also possible in which no switch operation tool 37 is provided.
(6) In the embodiment described above with reference to FIG. 5, the remaining battery amount display area 48a of the meter panel 48 displays the remaining amount within the range of the total capacity of power that can be supplied by the battery unit 4 and the threshold T, but the present invention is not limited to this embodiment. For example, the remaining battery amount display area 48a may be configured to display the remaining amount within a range from a state where the battery unit 4 is fully charged to a state where the power of the battery unit 4 is completely depleted.
(7) In the above-described embodiment, the mowing device 19 is exemplified as the work device. The present invention is not limited to this embodiment and examples of the work device may include a cultivator, a seeding device, a planter, a fertilizing device, a leaf cutter, a spreader, a baler, a mulcher, a stone picker, a rotary rake, a tedder, a traction-type harvest sorting device, a plucking device, an intertillage management device, and a ridging device.
(8) In the above-described embodiment, an electric tractor is shown as an electric work vehicle, but the present invention is not limited to this embodiment. Examples of the electric work vehicle may include an electric rice transplanter, an electric spreader, an electric sprayer, an electric combine, an electric mower, an electric intertillage management machine, an electric wheel loader, and an electric backhoe.

Note that the configurations disclosed in the above-described embodiments (including the other embodiments, the same applies hereinafter) can be applied in combination with the configurations disclosed in other embodiments, as long as no contradiction arises. The embodiments disclosed in the present specification are examples, and the embodiments of the present invention are not limited thereto and can be modified as appropriate within the scope that does not depart from the purpose of the present invention.

### Industrial Applicability

The present invention is applicable to not only an electric tractor but also various types of electric work vehicles such as a combine, a rice transplanter, and a construction work machine.

### Description of Reference Signs

4: battery unit (power storage device)
10: front wheel (travel device)
11: rear wheel (travel device)
17a: first clutch (work motive power transmitter)
18a: second clutch (work motive power transmitter)
19: mowing device (work device)
20: link mechanism
21: middle lift arm (lifting and lowering device)
22: rear lift arm (lifting and lowering device)
34: controller
36: remaining amount detector
37: switch operation tool (operation tool)
38: threshold setting unit
48: meter panel (display unit)
M: motor
T: threshold

## Claims

1. An electric work vehicle comprising:
a power storage device configured to store power;
a motor configured to drive at least either a travel device or a work device by consuming the power stored in the power storage device;
a remaining amount detector configured to detect a remaining amount of power suppliable by the power storage device; and
a controller switchable between a first control for controlling driving of the motor in response to a remaining amount value indicative of the remaining amount being greater than a preset threshold, and a second control for controlling driving of the motor so that power consumption of the motor is smaller than in the first control in response to the remaining amount value being less than or equal to the threshold.

2. The electric work vehicle according to claim 1, further comprising:
a threshold setting unit manually operable to set the threshold.

3. The electric work vehicle according to claim 1 or 2,
wherein the threshold is set within a range of 5 percent or more and 20 percent or less of a total capacity of power suppliable by the power storage device.

4. The electric work vehicle according to any one of claims 1 to 3, further comprising:
a work motive power transmitter configured to perform motive power transmission from the motor to the work device,
wherein the controller controls, in the second control, the work motive power transmitter to interrupt the motive power transmission.

5. The electric work vehicle according to any one of claims 1 to 4, further comprising:
a link mechanism to which the work device is connectable, the link mechanism being movable up and down between a work position at which the work device performs work, and a non-work position higher than the work position; and
a lifting and lowering device configured to lift and lower the link mechanism,
wherein in the second control, in response to the link mechanism being located at the work position, the controller controls the lifting and lowering device to lift the link mechanism to the non-work position.

6. The electric work vehicle according to any one of claims 1 to 5,
wherein in response to the remaining amount value reaching a value less than or equal to the threshold during execution of the first control, the controller stops driving the motor.

7. The electric work vehicle according to claim 6, further comprising:
a manually operable operation tool,
wherein the controller switches to the second control in response to the operation tool being operated with the remaining amount value being less than or equal to the threshold.

8. The electric work vehicle according to any one of claims 1 to 7, further comprising:
a display unit configured to display the remaining amount,
wherein the display unit displays the remaining amount within a range from a total capacity of power suppliable by the power storage device to the threshold.
